# EUROPEAN PATENT APPLICATION

(11) **EP 4 365 810 A1**
(43) Date of publication of application: **08.05.2024**
(21) Application number: 22832554.4
(22) Date of filing: 31.03.2022
(51) Int. Cl.: G06Q 50/02, H04W 52/18

(54) **AGRICULTURAL MACHINE AND COMMUNICATION SYSTEM FOR AGRICULTURAL MACHINE**

(30) Priority: 29.06.2021 JP 2021108019
(71) Applicant: Kubota Corporation, Osaka 556-8601 (JP)
(72) Inventor: IKEDA, Ryo, Sakai-shi, Osaka 590-0823 (JP); MIURA, Keisuke, Sakai-shi, Osaka 590-0823 (JP); KINUGAWA, Ryosuke, Sakai-shi, Osaka 590-0823 (JP); ISHIHARA, Kenji, Sakai-shi, Osaka 590-0823 (JP)
(74) Representative: Cabinet Beau de Loménie
(86) International application number: PCT/JP2022/016415
(87) International publication number: WO 2023/276393

(57) **Abstract**

An agricultural machine (tractor 1) that performs an agricultural work in a field, wherein data (11, I2) relating to the agricultural work or the agricultural machine is transmitted from a mobile terminal (40) to a stationary base station (60) included in an external communication network (N2). The agricultural machine (tractor 1) includes an agricultural base station (50) that can be connected to at least one of the mobile terminal (40) and the stationary base station (60).

## Description

### TECHNICAL FIELD

The present invention relates to, for example, an agricultural machine such as a tractor and an agricultural machine communication system.

### BACKGROUND ART

Conventionally, a work support system disclosed in Patent Literature 1 is known as a system for supporting work performed using a work machine which is an agricultural machine. The work support system of Patent Literature 1 includes a server and a mobile communication device which can be connected to the server via a mobile phone communication network or the like. The mobile communication device transmits data relating to work to the server via a mobile phone communication network or the like.

### CITATION LIST

### PATENT LITERATURE

Patent Literature 1: JP 2020-74069 A

### SUMMARY OF INVENTION

In the work support system according to Patent Literature 1, if a mobile communication device can be connected to a mobile phone communication network or the like, data transmission from the mobile communication device to a server is achieved. In this type of system, communication is generally established between a stationary base station and a mobile terminal in a communication network, and data or the like relating to agricultural work or agricultural machine is transmitted from the mobile terminal to the stationary base station. For example, direct communication between the stationary base station and the mobile terminal may be difficult depending on where the agricultural machine or the mobile communication device is located. In this case, it is difficult to appropriately achieve the above-described data transmission.

In view of the above problem, an object of the present invention is to provide an agricultural machine or an agricultural machine communication system that can reliably transmit data relating to agricultural work or an agricultural machine to a stationary base station even when direct communication between the stationary base station and a mobile terminal is difficult.

### SOLUTION TO PROBLEM

The technical means of the present invention for solving this technical problem is characterized in the following respects. An agricultural machine that performs an agricultural work in a field, wherein data relating to the agricultural work or the agricultural machine is transmitted from a mobile terminal to a stationary base station included in an external network, and the agricultural machine includes an agricultural base station that can be connected to at least one of the mobile terminal and the stationary base station.

The agricultural machine further includes: a traveling vehicle body that includes a connecting device to which a working device can be connected, wherein the agricultural base station is provided on the traveling vehicle body.

The agricultural base station operates when a position of the agricultural machine is in the field.

The agricultural base station connects to the mobile terminal or connects to the stationary base station via a radio wave, and changes an intensity of the radio wave in accordance with the position of the agricultural machine.

The agricultural base station can be connected to a plurality of the mobile terminals, and changes at least a number of connections to the mobile terminals in accordance with the position of the agricultural machine.

The agricultural base station operates when a radio wave intensity of the stationary base station at a position of the agricultural machine is less than or equal to a threshold value.

An agricultural machine communication system for an agricultural machine that performs an agricultural work in a field, the agricultural machine communication system includes: a stationary base station that is included in an external network; a mobile terminal that transmits data relating to the agricultural work or the agricultural machine to the stationary base station; and an agricultural base station that can be connected to at least one of the mobile terminal and the stationary base station.

### BRIEF DESCRIPTION OF DRAWINGS

Fig. 1 is a configuration diagram of a transmission included in a tractor.
Fig. 2 is a configuration diagram of a steering device included in the tractor and a functional block diagram of an electronic device.
Fig. 3 is an overall view of a communication system of a tractor and respective functional block diagrams of the tractor and a mobile terminal.
Fig. 4 is a diagram showing a state in which a setting screen is displayed on the mobile terminal.
Fig. 5 is a diagram showing a boundary that can be reached by a radio wave of a stationary base station in an area including a field.
Fig. 6 is a diagram showing a positional relation between the tractor and the mobile terminal in the vicinity of the boundary that can be reached by a radio wave.
Fig. 7 is a diagram showing a database of location information of a field and installation location information of a stationary base station included in a storage unit of an agricultural base station.
Fig. 8 is a diagram showing a table defining a relation between a separation distance and an oscillation radio wave intensity included in the storage unit of the agricultural base station.
Fig. 9 is a flowchart showing operations in the tractor (and the agricultural base station) and the mobile terminal.
Fig. 10 is a diagram showing a state in which a boundary that can be reached by a radio wave of an agricultural base station is superimposed on a boundary that can be reached by a radio wave of the stationary base station in the area including the field.
Fig. 11 is a diagram showing a positional relation between the tractor and the mobile terminal in the vicinity of the boundary that can be reached by a radio wave.
Fig. 12 is an overall view of the tractor.

### DESCRIPTION OF EMBODIMENTS

Hereinafter, embodiments of the present invention will be described with reference to the drawings.

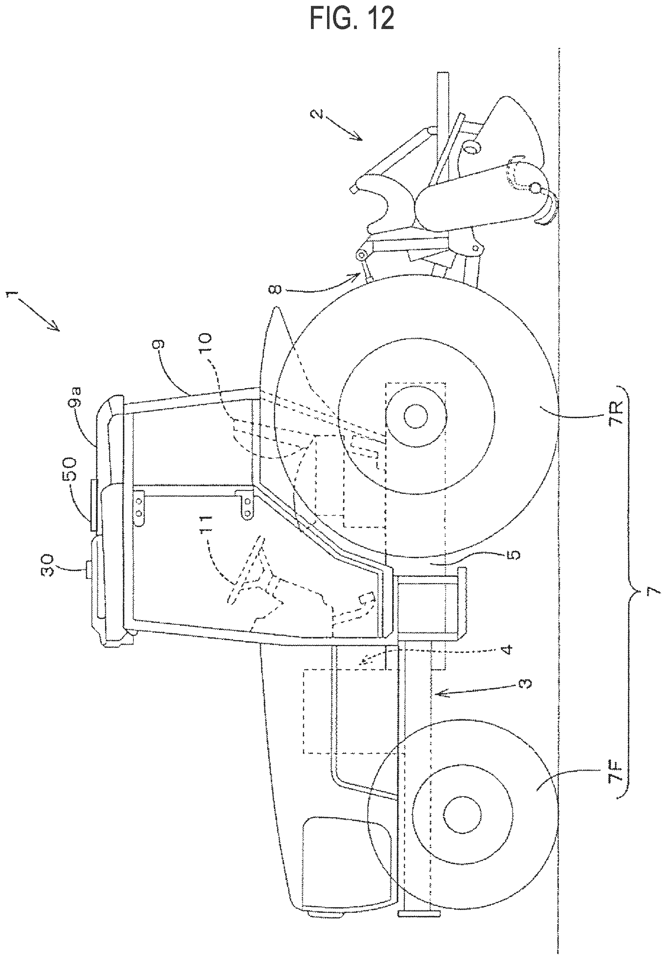

Fig. 12 shows a tractor 1 as an example of a work machine. Although the tractor 1 will be described as an example, the work machine is not limited to the tractor and may be an agricultural machine such as a rice transplanter.

### <Tractor>

As shown in Fig. 12, the tractor 1 includes a traveling vehicle (traveling vehicle body) 3 having a traveling device 7, a prime mover 4, and a transmission 5. The traveling device 7 has a front wheel 7F and a rear wheel 7R. The front wheel 7F may be a tire type or a crawler type. The rear wheel 7R may also be a tire type or a crawler type. The prime mover 4 is a diesel engine, an electric motor, or the like. The transmission 5 is capable of switching the propulsive force of the traveling device 7 by shifting, and is capable of switching the traveling device 7 between forward travel and reverse travel. A cabin 9 is provided behind the prime mover 4 of the traveling vehicle 3, and a driving seat 10 is provided in the cabin 9. A display device that displays various information of the tractor 1 is provided around the driving seat 10.

The rear portion of the traveling vehicle 3 is provided with a connecting unit 8 constituted of a mechanism including a 3-point link mechanism, etc. The working device 2 is detachable from the connecting unit 8. By connecting the working device 2 to the connecting unit 8, the working device 2 can be towed by the traveling vehicle 3. The working device 2 may be a tilling device for tilling, a manure spreading device for spreading manure, an agrochemical spreading device for spreading agrochemicals, a harvesting device for harvesting, a reaping device for reaping grass or the like, a spreading device for spreading grass or the like, a grass collecting device for collecting grass or the like, a shaping device for shaping grass or the like, etc. Fig. 12 shows an example in which a tilling device is attached as the working device 2.

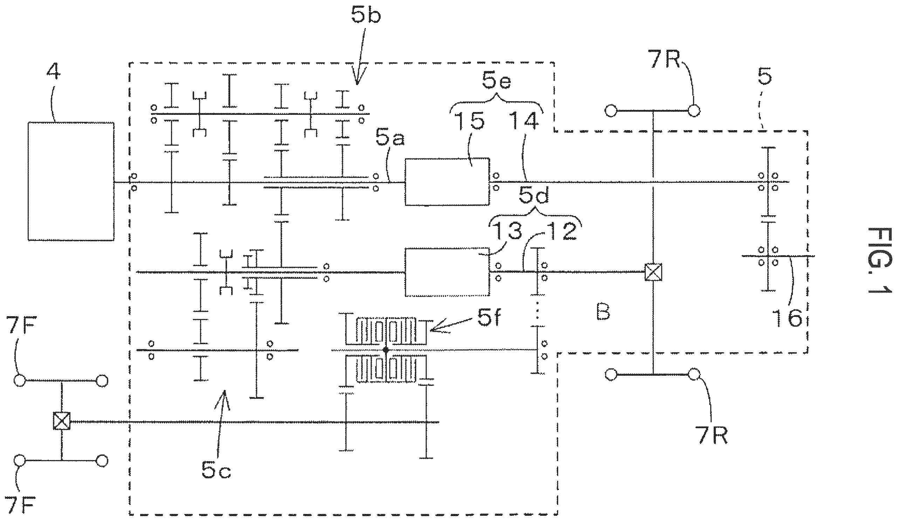

As shown in Fig. 1, the transmission 5 includes a main shaft (propeller shaft) 5a, a main transmission unit 5b, an auxiliary transmission unit 5c, a shuttle unit 5d, and a PTO power transmission unit 5e. The propeller shaft 5a is rotatably supported by a housing case of the transmission 5, and power from a crankshaft of the prime mover 4 is transmitted to the propeller shaft 5a. The main transmission unit 5b includes a plurality of gears and a shifter for changing the connection of the gears. The main transmission unit 5b changes the connection (meshing) of the plurality of gears with the shifter as appropriate to change the rotation input from the propeller shaft 5a and output the changed rotation (shift).

Like the main transmission unit 5b, the auxiliary transmission unit 5c includes a plurality of gears and a shifter for changing the connection of the gears. The auxiliary transmission unit 5c changes the connection (meshing) of the plurality of gears with the shifter as appropriate to change the rotation input from the main transmission unit 5b and output the changed rotation (shift). The shuttle unit 5d has a shuttle shaft 12 and a forward and reverse travel switching unit 13. Power output from the auxiliary transmission unit 5c is transmitted to the shuttle shaft 12 via the gears and the like. The forward and reverse travel switching unit 13 is constituted of, for example, a hydraulic clutch and the like, and switches the rotation directions of the shuttle shaft 12, i.e., forward travel and reverse travel of the tractor 1, by engaging or disengaging the hydraulic clutch. The shuttle shaft 12 is connected to a rear wheel differential device. The rear wheel differential device rotatably supports a rear axle to which the rear wheel 7R is attached.

The PTO power transmission unit 5e includes a PTO propeller shaft 14 and a PTO clutch 15. The PTO propeller shaft 14 is rotatably supported and is capable of transmitting power from the propeller shaft 5a. The PTO propeller shaft 14 is connected to a PTO shaft 16 via the gears and the like. The PTO clutch 15 is constituted of, for example, a hydraulic clutch and the like, and is switched between a state in which the power of the propeller shaft 5a is transmitted to the PTO propeller shaft 14 and a state in which the power of the propeller shaft 5a is not transmitted to the PTO propeller shaft 14 by engaging or disengaging the hydraulic clutch.

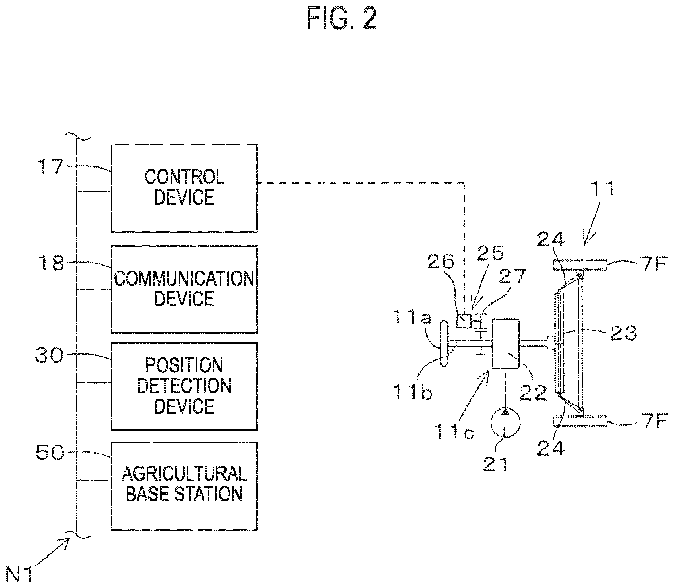

As shown in Fig. 2, the tractor 1 includes a steering device 11. The steering device 11 includes a handle (steering wheel) 11a, a steering shaft (rotation shaft) 11b that rotates in accordance with rotation of the handle 11a, and an auxiliary mechanism (power steering mechanism) 11c that assists steering of the handle 11a. The auxiliary mechanism 11c includes a hydraulic pump 21, a control valve 22 to which hydraulic oil discharged from the hydraulic pump 21 is supplied, and a steering cylinder 23 operated by the control valve 22. The control valve 22 is an electromagnetic valve that operates based on a control signal. The control valve 22 is, for example, a 3-position switching valve that can be switched by movement of a spool or the like. The control valve 22 can also be switched by steering of the steering shaft 11b. The steering cylinder 23 is connected to an arm (knuckle arm) 24 that changes the direction of the front wheel 7F.

Therefore, when the driver operates the handle 11a, the switching position and the opening degree of the control valve 22 are switched in accordance with the handle 11a, and the steering cylinder 23 extends and contracts to the left or the right in accordance with the switching position and the opening degree of the control valve 22, whereby the steering direction of the front wheel 7F can be changed. That is, the steering of the tractor 1 (traveling vehicle body 3) can be manually performed using the steering mechanism 11.

In addition, steering of the tractor 1 (traveling vehicle 3) can also be performed automatically. The steering device 11 includes an automatic steering mechanism 25. The automatic steering mechanism 25 performs automatic steering of the traveling vehicle body 3, and automatically steers the traveling vehicle body 3 based on the position of the traveling vehicle body 3 and a predetermined traveling plan line. The automatic steering mechanism 25 includes a steering motor 26 and a gear mechanism 27. The steering motor 26 is a motor whose rotation direction, rotation speed, rotation angle, and the like can be controlled based on the current position. The gear mechanism 27 includes a gear that is provided on the steering shaft 11b and rotates together with the steering shaft 11b, and a gear that is provided on the rotation shaft of the steering motor 26 and rotates together with the rotation shaft. When the rotation shaft of the steering motor 26 rotates, the steering shaft 11b automatically rotates (turns) via the gear mechanism 27, and the steering direction of the front wheel 7F can be changed so that the vehicle body position coincides with the traveling plan line. The steering mechanism 11 described above is merely an example, and is not limited to the configuration described above.

As shown in Fig. 2, a plurality of electronic devices are mounted on the tractor 1. The electronic devices are devices for operating the tractor 1 and include, for example, sensors (an accelerator pedal sensor, a lever detection sensor, a crank position sensor, a fuel sensor, a water temperature sensor, and the like), switches (an ignition switch, a parking brake switch, a PTO switch, and the like), a display device constituted of a display panel and the like, a control device 17 constituted of a CPU and the like, a communication device 18, a position detection device 30, an agricultural base station 50, and the like. The plurality of electronic devices are connected to each other via an in-vehicle communication network N1 such as CAN, LIN, or FlexRay. To the in-vehicle communication network N1, detection signals detected by sensors, switch signals indicating states of switches, command signals (control signals) for operating operation units (for example, an engine, an electromagnetic valve, a pump, and the like) of the tractor 1 operated in accordance with the control of the control device 17, position data (detection signals) of the tractor 1 detected by the position detection device 30, and the like are output. A notification signal for notifying a warning or a failure, etc. is also output to the in-vehicle communication network N1.

The control device 17 performs traveling system control, working system control, and the like of the tractor 1. A sensor or a switch, etc. is connected to the control device 17, and a detection signal detected by the sensor or a switch signal indicating a state of the switch is output to the in-vehicle communication network N1 via the control device 17. The control device 17 controls the operation of the prime mover 4 and the automatic steering of the tractor 1 as a traveling system control. The control device 17 controls the rotational speed and the like of the prime mover 4 based on signals from, for example, an accelerator pedal sensor that detects an operation amount of an accelerator pedal when the accelerator pedal is operated, a lever detection sensor that detects a shift lever position when a shift lever for shifting is operated, a crank position sensor that detects a crank position, and the like. Further, the control device 17 controls the automatic steering mechanism 25 based on, for example, the position of the tractor 1 detected by the position detection device 30, the roll angle of the traveling vehicle 3, and the like.

When the control device 17 receives an input from an operation tool such as an operation lever or an operation switch provided around the driving seat as a working system control, the control device 17 controls operations such as raising and lowering of the 3-point link mechanism of the connecting unit 8 and the output (rotation speed) of the PTO propeller shaft 14 in accordance with the input value. Specifically, the control device 17 controls the raising and lowering of the 3-point link mechanism and the rotation speed of the PTO propeller shaft 14 based on, for example, a sensor that detects an operation amount of the operation lever that operates the 3-point link mechanism of the connecting unit 8, a sensor that detects a position of an operation switch which sets the rotation speed of the PTO propeller shaft 14, and the like. The control device 17 also controls the display device based on signals from sensors, switches, and the like. For example, movement of a pointer indicator provided in the display device, ON/OFF of an LED, display of a liquid crystal display unit, and the like are controlled. A control signal at the time of performing the traveling system control or the working system control of the tractor 1 and various detection signals for performing the control are transmitted to each portion of the tractor 1. The traveling system control and the working system control performed by the control device 17 are not limited to those described above. Further, the control device 17 controls the data transmission and reception performed by the communication device 18.

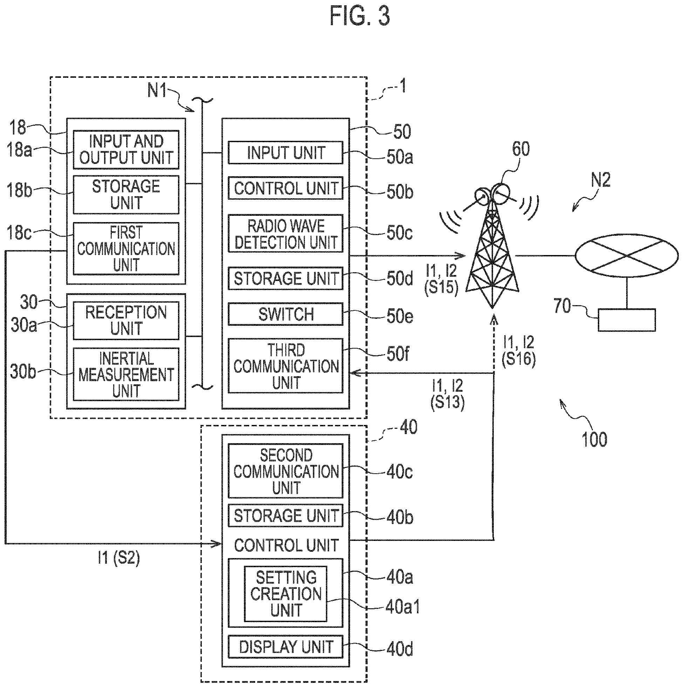

As shown in Figs. 2 and 3, the communication device 18 includes an input and output unit 18a, a storage unit 18b, and a first communication unit 18c. The above-described in-vehicle communication network N1 is connected to the input and output unit 18a, and data flowing to the in-vehicle communication network N1 is input to the input and output unit 18a. The storage unit 18b and the first communication unit 18c are connected to the input and output unit 18a. The data received by the first communication unit 18c and the data stored in the storage unit 18b are output to the in-vehicle communication network N1 via the input and output unit 18a. The storage unit 18b is constituted of a non-volatile memory and the like, and stores, for example, data of the in-vehicle communication network N1 input to the input and output unit 18a and data received by the first communication unit 18c. An identification information for identifying the communication device 18 is stored in the storage unit 18b, and thus, the communication device 18 can be specified.

For example, when the tractor 1 to which a tilling device is connected as the working device 2 is operated, data such as the rotation speed of the rotary, the load on the rotary, the rotation speed of the engine, the vehicle speed, and the depth of tillage is output to the in-vehicle communication network N1. The input and output unit 18a receives input of data at the time when the tractor 1 operates, such as the rotation speed of the rotary, the load on the rotary, the rotation speed of the engine, the vehicle speed, and the depth of tillage, and the data is stored in the storage unit 18b.

When the working device 2 is a manure spreading device, an agrochemical spreading device, or a seed spreading device, data such as the vehicle speed, the rotation speed of the engine, the spreading amount (the spreading amount of manure, the spreading amount of agrochemical, or the spreading amount of seed) is output to the in-vehicle communication network N1. The input and output unit 18a receives input of data at the time when the tractor 1 operates, such as the vehicle speed, the rotation speed of the engine, the spreading amount of manure, the spreading amount of agrochemical, or the spreading amount of seed, and the data is stored in the storage unit 18b. Alternatively, when the working device 2 is a harvesting device, data such as the vehicle speed, the rotation speed of the engine, or the harvest amount is output to the in-vehicle communication network N1. An input and output unit 20 receives input of data at the time when the tractor 1 operates, such as the vehicle speed, the rotation speed of the engine, or the harvest amount, and the data is stored in the storage unit 18b. Furthermore, the cumulative operation time (hour meter), which is the time during which the tractor 1 has operated, and the state (for example, the presence or absence of abnormality) of the devices mounted on the tractor 1 are also output to the in-vehicle communication network N1. The input and output unit 18a receives input of data at the time when the tractor 1 operates, such as the cumulative operation time or the state of the devices, and the data is stored in the storage unit 18b. Note that the data at the time when the tractor 1 operates (operation data of the tractor) is not limited to the above-described data.

As shown in Fig. 3, the first communication unit 18c transmits the operation data of the tractor 1 to the mobile terminal 40 by radio communication as a data I1 relating to agricultural work. The first communication unit 18c converts the data received from the in-vehicle communication network N1 into a communication format for transmission to the mobile terminal 40. Specifically, when the tractor 1 operates, the first communication unit 18c acquires the operation data (including the data I1 relating to agricultural work) via the storage unit 18b, converts the communication format, and transmits the operation data to the mobile terminal 40. The communication format used between the communication device 18 and the mobile terminal 40 is not limited, and may be, for example, the communication standard IEEE802.11 series or other communication formats.

The position detection device 30 is installed at a substantially central portion of an upper surface 9a of the cabin 9 (see Fig. 12). The position detection device 30 can detect its own position (positioning information including latitude and longitude) by a satellite positioning system (positioning satellite) such as D-GPS, GNSS like GPS, GLONASS, BeiDou, Galileo, or Michibiki. That is, the position detection device 30 receives a satellite signal (a position of a positioning satellite, a transmission time, correction information, and the like) transmitted from the positioning satellite and detects a position (for example, latitude and longitude) of the tractor 1, i.e., the vehicle body position based on the satellite signal. The position detection device 30 includes a reception unit 30a and an inertial measurement unit 30b. The reception unit 30a includes an antenna and the like, and receives the satellite signal transmitted from the positioning satellite. The inertial measurement unit 30b includes an acceleration sensor that detects acceleration, a gyro sensor that detects angular velocity, and the like. The inertial measurement unit 30b can detect a roll angle, a pitch angle, a yaw angle, and the like of the traveling vehicle 3. Various data (signals) detected by the position detection device 30 are output to the in-vehicle communication network N1 via the control device 17. Note that, in the present embodiment, the position detection device 30 detects a position by a satellite positioning system, but is not limited thereto, and may detect a position based on an optical method (a camera, a LiDAR, or the like).

### <Mobile terminal>

The mobile terminal 40 may be, for example, a smartphone (multifunctional mobile phone), a tablet PC, a notebook PC, a PDA, or the like having relatively high computing power. The mobile terminal 40 is carried by an agricultural worker during agricultural work, and the mobile terminal 40 is assigned to each agricultural worker. Hereinafter, for convenience of description, the agricultural worker may be referred to as "worker".

The mobile terminal 40 includes a control unit 40a, a storage unit 40b, a second communication unit 40c, and a display unit 40d. The control unit 40a is constituted of a CPU and the like, and controls the storage unit 40b, the second communication unit 40c, and the display unit 40d. The display unit 40d is constituted of a touch panel and the like. The storage unit 40b is constituted of a non-volatile memory and the like, and stores, for example, data received by the second communication unit 40c. The second communication unit 40c receives the data transmitted from the communication device 18 of the tractor 1 via radio communication. Further, the second communication unit 40c transmits the data stored in the storage unit 40b to a stationary base station 60 included in an external communication network (external network) N2 via radio communication. The second communication unit 40c converts the data received from the communication device 18 into a communication format for transmission to the stationary base station 60. Specifically, when the operation data (including the data I1 relating to agricultural work) is transmitted from the communication device 18, the operation data is received by the second communication unit 40c and stored in the storage unit 40b. The second communication unit 40c acquires the operation data via the storage unit 40b, converts the communication format, and transmits the operation data to the stationary base station 60. The second communication unit 40c communicates with the stationary base station 60 by, for example, the fifth generation communication system. Thus, the mobile terminal 40 transmits the operation data (including the data I1 relating to agricultural work) to the stationary base station 60 included in the external communication network N2.

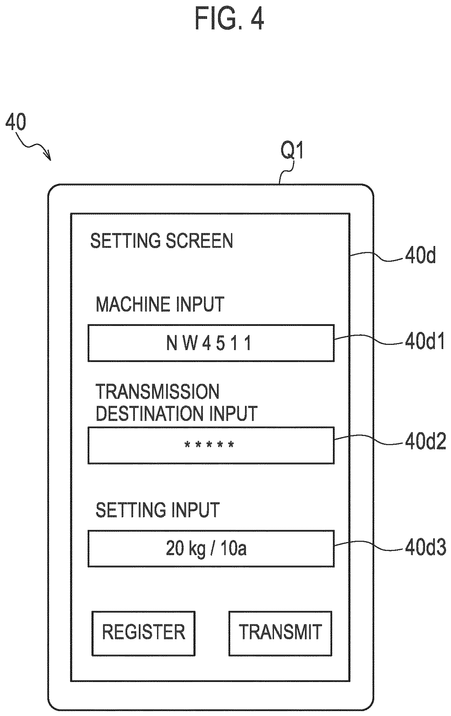

The mobile terminal 40 also transmits a data I2 relating to agricultural machine to the stationary base station 60 included in the external communication network N2. The control unit 40a includes a setting creation unit 40a1 that creates setting data for the tractor 1. The setting creation unit 40a1 is constituted of a program and the like stored in the control unit 40a. When the agricultural worker or the like operates the display unit 40d to activate an application software for creating the setting data, the setting creation unit 40a1 displays a setting screen Q1 for creating the setting data as shown in Fig. 4. The setting creation unit 40a1 displays a machine input unit 40d1 for inputting machine information to be set (for example, the data I2 relating to agricultural machine such as tractor or implement) on the setting screen Q1. To the machine input unit 40d1, for example, a model or a type of an agricultural machine, a model or a type of an implement (working device), and the like can be input as machine information. The setting creation unit 40a1 displays a transmission destination input unit 40d2 for inputting a transmission destination to which setting data is to be transmitted on the setting screen Q1. Transmission identification information indicating a transmission destination (for example, a worker name, a mail address, a serial number, or machine information) can be input to the transmission destination input unit 40d2.

The setting creation unit 40a1 displays a setting input unit 40d3 for inputting a setting value on the setting screen Q1. A setting value based on the machine information input to the machine input unit 40d1 can be input to the setting input unit 40d3. For example, when machine information corresponding to a manure spreading device is input to the machine input unit 40d1, the spreading amount of manure can be input to the setting input unit 40d3 as a setting value, and when machine information corresponding to an agrochemical spreading device is input to the machine input unit 40d1, the spreading amount of agrochemical can be input to the setting input unit 40d3 as a setting value. In addition, for example, when machine information corresponding to a combined harvester is input to the machine input unit 40d1, a previously prepared mowing method can be input as a setting value. The setting values of the setting input unit 40d3 are not limited to those described above.

When the setting data (machine information, transmission identification information, setting value) is input and a "register" button displayed on the setting screen Q1 is selected on the setting screen Q1, the setting creation unit 40a1 stores the setting data (machine information, transmission identification information, setting value) input on the setting screen Q1 in the storage unit 40b. After the setting data is created on the setting screen Q1, the setting data can be transmitted by the second communication unit 40c. When the creation of the setting data by the setting creation unit 40a1 is completed, the control unit 40a receives an input from a "transmit" button displayed on the display unit 40d, and when the transmission button is tapped, the process proceeds to the transmission processing of the setting value by the second communication unit 40c. In the transmission processing, the second communication unit 40c reads the machine information, the transmission identification information, and the setting value stored in the storage unit 40b, and transmits these setting data (the machine information, the transmission identification information, and the setting value) to the stationary base station 60 by radio communication.

### <Stationary base station 60>

As shown in Fig. 3, the stationary base station 60 is, for example, a base station for the fifth generation communication system and is constructed at a predetermined location. The stationary base station 60 is capable of performing radio communication via transmission and reception of radio waves, and may function as a so-called macro cell base station. The external communication network N2 includes a server 70 and the like in addition to the stationary base station 60. The stationary base station 60 is connected to the server 70 via an exchange station, an optical cable, and the like in the external communication network N2. For example, the operation data of the tractor 1 received by the stationary base station 60 and the setting data of the mobile terminal 40 can be transmitted to the server 70 via the external communication network N2. On the server 70 side, by organizing the received various data, it is possible to support creation of a work diary, manage maintenance, and grasp presence or absence of occurrence of abnormality, etc. As described above, the communication system 100 is constituted of the tractor 1, the mobile terminal 40, and the stationary base station 60. In the present embodiment, the stationary base station 60 is a base station for the fifth generation communication system, but is not limited thereto, and may be a base station for a system of another standard such as the fourth generation communication system.

### <Agricultural base station>

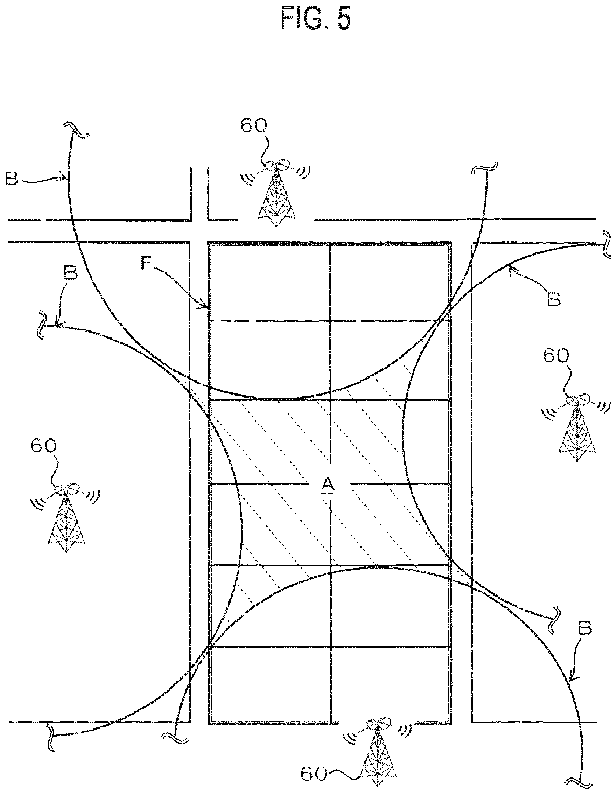

As a conventional data transmission mode, the operation data (including the data I1 relating to agricultural work) and the setting data (including the date I2 relating to agricultural machine) are transmitted from the mobile terminal 40 to the stationary base station 60. That is, direct radio communication is established between the mobile terminal 40 and the stationary base station 60, and thus, the above-described data communication becomes possible. As shown in Fig. 5, each boundary B that can be reached by a radio wave from the stationary base station 60 generally has a substantially circumferential contour centered respectively on each stationary base station 60. In a radially inner region of the boundary B, radio communication with the stationary base station 60 can be established. On the other hand, it is difficult to establish radio communication in a region outside the boundary B. It is possible that in a field F, there is a region A1 (dashed line shaded area in the drawing) that does not belong to any region inside the boundary B when the area of the field F is vast or the like. In the region A1 of the field F, it is difficult to establish the radio communication, and it is difficult to appropriately transmit the operation data and the setting data.

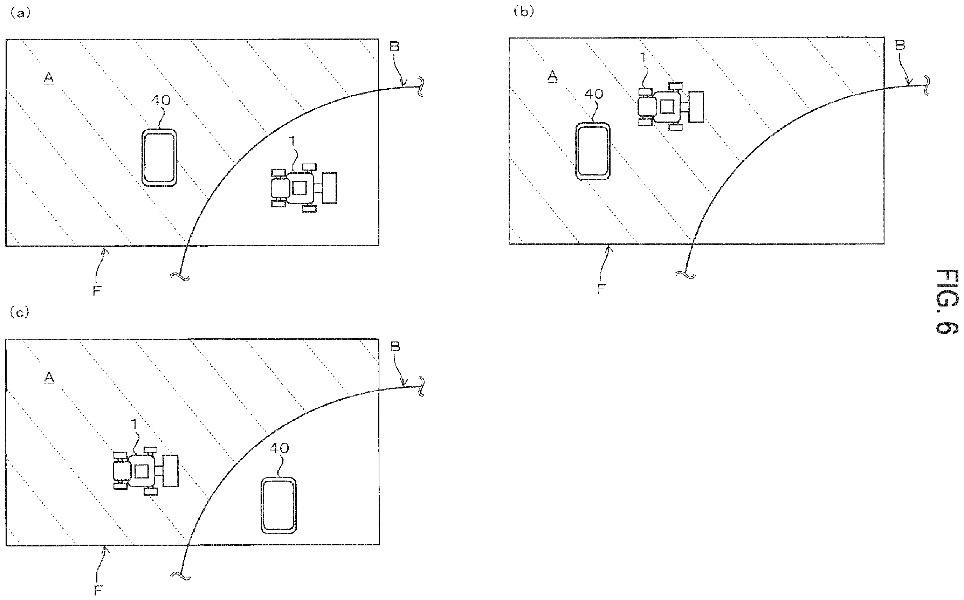

It is possible that in the field F, the tractor 1 and (the agricultural worker carrying) the mobile terminal 40 are located in the region A1 as they move respectively. More specifically, as shown in Fig. 6(a), the tractor 1 and the mobile terminal 40 may be located in a region inside the boundary B and the region A1, respectively. As shown in Fig. 6(b), both the tractor 1 and the mobile terminal 40 may be located in the region A1. Further, as shown in Fig. 6(c), the positional relation may be opposite to that shown in Fig. 6(a). In these patterns, there arises a problem that it is difficult to appropriately transmit the operation data and the setting data described above.

On the other hand, in radio communication, the fifth generation communication system is being introduced in response to a demand for further improvement in communication amount and communication speed. As in the present embodiment, there is a similar demand for communication of the data I1 relating to agricultural work and the data I2 relating to agricultural machine, and introduction of the fifth generation communication system can be expected to be preferable. However, the stationary base station 60 for the fifth generation communication system has a characteristic that it is difficult for radio waves for radio communication to reach the stationary base station 60 as compared with the conventional stationary base station of the fourth generation communication system and the like. In the case of the fifth generation communication system, the above-mentioned problem becomes remarkable. Therefore, for example, in order to enable appropriate transmission and reception in a field or the like, it is conceivable to newly construct the stationary base station 60 in the vicinity of the field to make the region A1 as small as possible, but there arises a problem that a large amount of cost and time are required. Therefore, there is a demand for a technique capable of achieving appropriate radio communication in a field or the like by means of alternatives to the construction of new stationary base stations.

In view of the above, the tractor 1 of the present embodiment includes the agricultural base station 50 at a substantially central portion of the upper surface 9a of the cabin 9 (see Fig. 12). The agricultural base station 50 establishes radio communication between the stationary base station 60 and the mobile terminal 40, and is mounted on the traveling vehicle 3 of the tractor 1. That is, the agricultural base station 50 functions as a mobile base station different from the stationary base station 60. The agricultural base station 50 can be respectively connected to both the stationary base station 60 and the mobile terminal 40 so that radio communication of the fifth generation communication system is possible. In the present embodiment, a plurality of mobile terminals 40 can be connected to one agricultural base station 50.

As shown in Fig. 3, the agricultural base station 50 includes an input unit 50a, a control unit 50b, a radio wave detection unit 50c, a storage unit 50d, a switch 50e, and a third communication unit 50f. The input unit 50a is connected to the in-vehicle communication network N1 and receives the input of the position data of the tractor 1 detected by the position detection device 30. The control unit 50b is constituted of a CPU and the like, and controls the radio wave detection unit 50c, the storage unit 50d, the switch 50e, and the third communication unit 50f. The radio wave detection unit 50c detects a radio wave oscillated from the stationary base station 60 and calculates the radio wave intensity.

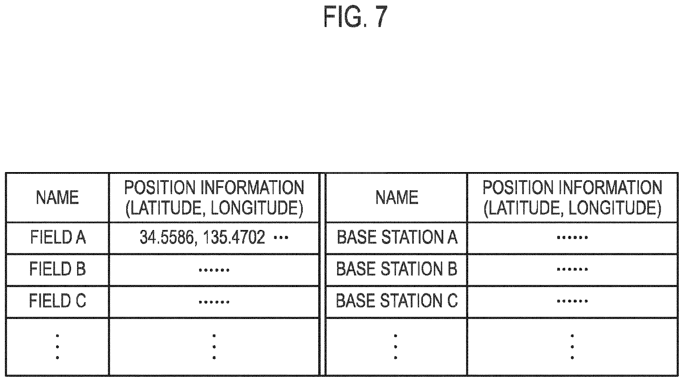

The storage unit 50d is constituted of a non-volatile memory and the like, and stores a database, a look-up table, an SSID/encryption key for connection with the mobile terminal 40, and the like, and the storage unit 50d also stores data received by the third communication unit 50e. For example, as shown in Fig. 7, the database stored in the storage unit 50d includes position data (latitude and longitude) corresponding to each of a plurality of fields (fields A, B, C ...) and position data (latitude and longitude) corresponding to installation positions of a plurality of stationary base stations 60 (base stations A, B, C ...), etc., and is registered in the storage unit 50d in advance and can be respectively referred to by the CPU of the control unit 50b. The position data corresponding to the field and the position data corresponding to the installation position of the stationary base station 60 may be registered and updated for every predetermined period.

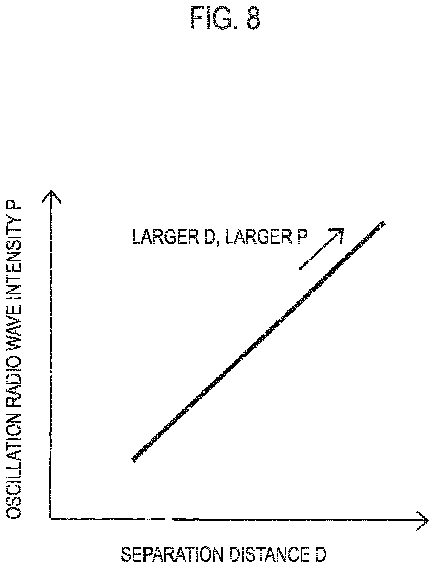

For example, as shown in Fig. 8, the table stored in the storage unit 50d defines in advance the relation between a separation distance D, which is between the installation position of the stationary base station 60 and the position of the tractor 1, and an oscillation radio wave intensity P of the third communication unit 50e, and the separation distance D serves as an argument. For example, viewing from a position L1 of the tractor 1 detected by the position detection device 30, a position L2 of the stationary base station 60 that is closest to L1 may be searched for from the database described above, and the shortest distance between the position data L1 and L2 may be determined as the separation distance D. This table can also be referred to by the CPU of the control unit 50b, and the oscillation radio wave intensity P is determined so as to increase as the separation distance D increases. The oscillation radio wave intensity P which has been determined is temporarily stored in the storage unit 50d.

When a predetermined condition is satisfied, the switch 50e activates and operates each function of the agricultural base station 50. The electronic devices such as the agricultural base station 50 are operated by power of a battery mounted on the tractor 1. When the predetermined condition is not satisfied, the switch 50e constantly suppresses the power of the battery to the agricultural base station 50, brings each function of the agricultural base station 50 into a standby state, and substantially turns off the agricultural base station 50. Here, the predetermined condition is satisfied, for example, when the position of the tractor 1 detected by the position detection device 30 coincides with one of the positions corresponding to the fields (see Fig. 7) or when the radio wave intensity of the stationary base station 60 detected by the radio wave detection unit 50c is less than or equal to a threshold value. The threshold value may be a lower limit value or the like of the radio wave intensity for achieving appropriate radio communication between the mobile terminal 40 and the stationary base station 60, and may be set to 0.01 to 0.8 microwatts per square centimeter, for example.

The third communication unit 50e can establish radio communication with a plurality of mobile terminals 40. The plurality of mobile terminals 40 include the mobile terminal 40 corresponding to the tractor 1 and mobile terminals 40 corresponding to a plurality of agricultural machines different from the tractor 1. When the agricultural base station 50 is activated by the switch 50e, the third communication unit 50e transmits a beacon including an SSID to the plurality of mobile terminals 40 and verifies encryption keys received from the plurality of mobile terminals 40 against encryption keys stored in the storage unit 50d. The third communication unit 50e permits connection of radio communication only to the mobile terminals 40 for which verification has been completed.

The number of connections (the maximum number of connections that can be made) with the third communication unit 50e of the mobile terminal 40 is determined in accordance with the position of the tractor 1. Specifically, the number of connections with the third communication unit 50e of the mobile terminal 40 may increase as the separation distance D which is determined as described above increases. This is based on the fact that the larger the separation distance D is, the more difficult the direct communication between the stationary base station 60 and the mobile terminal 40 tends to be and the radio communication via the agricultural base station 50 is required for more mobile terminals 40.

The third communication unit 50e receives the data transmitted via radio communication from the mobile terminals 40 to which connection has been permitted. The third communication unit 50e transmits the data stored in the storage unit 50d to the stationary base station 60 included in the external communication network N2 via radio communication. The third communication unit 50e converts the data received from the mobile terminal 40 into a communication format for transmission to the stationary base station 60. Specifically, when the operation data (including the data I1 relating to agricultural work) and the setting data (including the data I2 relating to agricultural machine) are transmitted from the mobile terminal 40, the operation data and the setting data are received by the third communication unit 50e and stored in the storage unit 50d. The third communication unit 50e acquires the operation data via the storage unit 50d, converts the communication format, and transmits the operation data and the setting data to the stationary base station 60. The third communication unit 50e performs radio communication respectively with the mobile terminal 40 and the stationary base station 60 via radio waves by, for example, the fifth generation communication system.

The third communication unit 50e includes a radio wave oscillation unit 50e1 including an antenna, a high-frequency generation device, and the like. At the time of radio communication with the mobile terminal 40 and the stationary base station 60, a predetermined radio wave is oscillated from the radio wave oscillation unit 50e1. The antenna of the radio wave oscillation unit 50e1 is, for example, an active phased array antenna, and is configured to be capable of multi-beam multiplexing. The high-frequency generation device of the radio wave oscillation unit 50e1 is, for example, a unit including a crystal oscillation element, an oscillation circuit, and the like, and is capable of applying a high-frequency current to the antenna. The radio wave oscillated by the radio wave oscillation unit 50e1 has a frequency band defined by 3GPP TS 38.101 or the like, for example, and a FR1 lower than or equal to the 6GHz band, a FR2 in the millimeter wave band, or the like may be used as the frequency. The oscillation radio wave intensity P is determined based on the table included in the storage unit 50d and the separation distance D which is determined as described above (see Fig. 8). The current applied to the antenna is controlled so that the intensity of the radio wave oscillated from the radio wave oscillation unit 50e1 becomes equal to the oscillation radio wave intensity P which has been determined.

Thus, the operation data (including the data I1 relating to agricultural work) and the setting data (including the data I2 relating to agricultural machine) are transmitted from the mobile terminal 40 to the stationary base station 60 included in the external communication network N2 via the agricultural base station 50.

### <Actual operation>

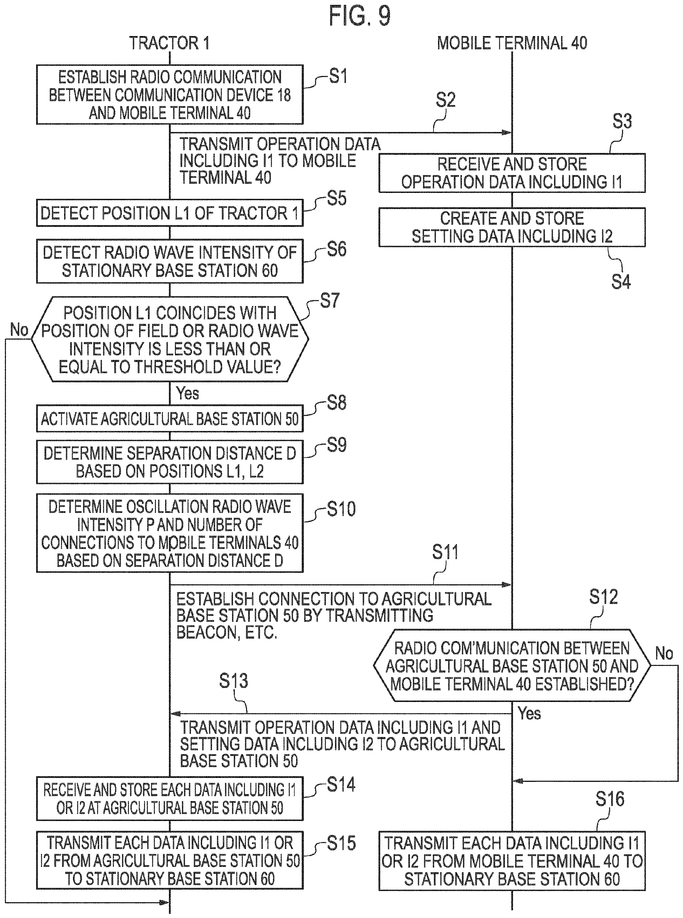

Fig. 9 is a flowchart showing a flow in radio communication of the operation data and the setting data, and also shows an operation flow of the tractor 1 and the mobile terminal 40. In a state where the prime mover 4 and the like are activated and the tractor 1 is operated, first, radio communication between the communication device 18 of the tractor 1 and the mobile terminal 40 is established (S1). The operation data including the data I1 relating to agricultural work is transmitted from the first communication unit 18c of the communication device 18 to the mobile terminal 40 via the in-vehicle communication network N1 (S2). The transmitted operation data is received by the second communication unit 40c of the mobile terminal 40 and is stored in the storage unit 40b (S3). The setting data including the data I2 relating to agricultural machine is created by the setting creation unit 40a1 of the mobile terminal 40 and stored in the storage unit 40b (S4).

The position detection device 30 of the tractor 1 detects the position L1 of the tractor 1, and outputs the detected position data of the tractor 1 to the in-vehicle communication network N1 (S5). The radio wave intensity of the stationary base station 60 is detected by the radio wave detection unit 50c of the agricultural base station 50 (S6). The control unit 50b of the agricultural base station 50 determines whether or not there is a position that coincides with the detected position L1 of the tractor 1 in the database of the positions of the fields registered in the storage unit 50d, and determines whether or not the detected radio wave intensity is less than or equal to a threshold value (S7). When any of the conditions in the S7 is satisfied, it is determined as "Yes", and the agricultural base station 50 is activated by the switch 50e of the agricultural base station 50 (S8).

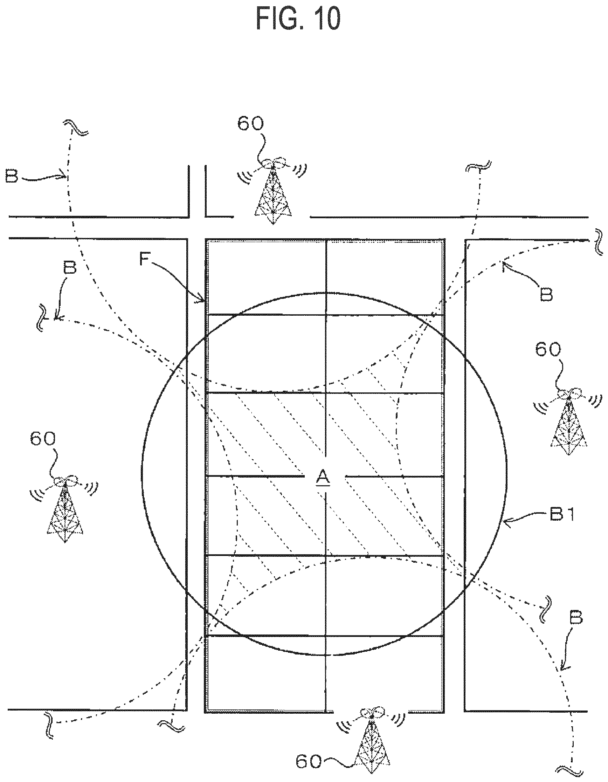

As shown in Fig. 10 corresponding to Fig. 5, when the tractor 1 is located in the field F, the agricultural base station 50 of the tractor 1 is activated. Thus, radio waves for radio communication are oscillated from the agricultural base station 50. A boundary B1 that can be reached by a radio wave from the agricultural base station 50 respectively has a substantially circumferential contour centered on the agricultural base station 50. In the inner region of the boundary B1, radio communication with the agricultural base station 50 can be established. The inner region of the boundary B1 is positioned so as to overlap the above-described region A1. Therefore, in addition to the inner region of the boundary B of the stationary base station 60, it is possible to expand the range in which radio communication can be established in the inner region of the boundary B1 of the agricultural base station 50. In other words, the agricultural base station 50 can cover a region where radio waves from the stationary base station 60 are difficult to reach (i.e., the region A1).

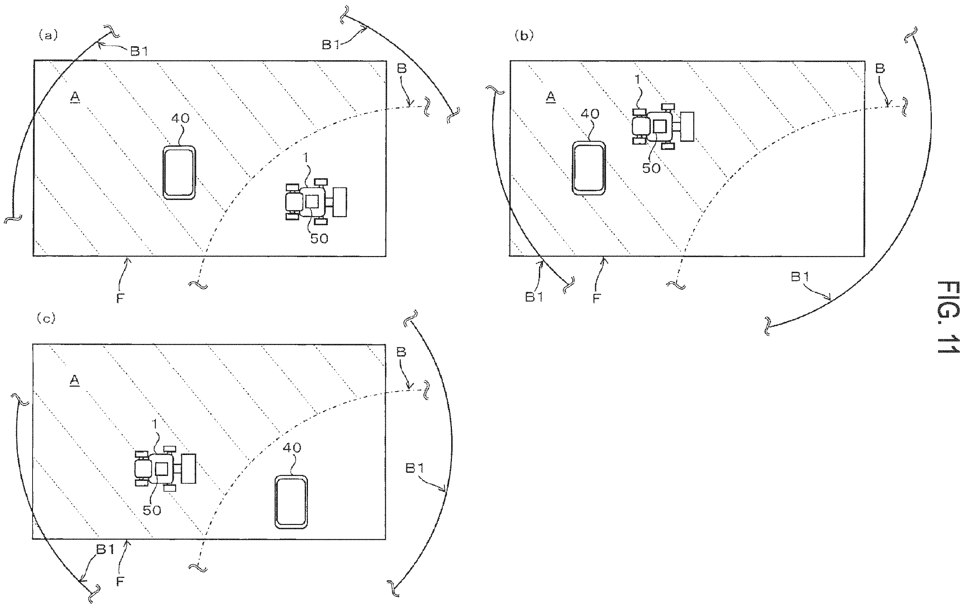

More specifically, as shown in Figs. 11(a) to 11(c) corresponding to Figs. 6(a) to 6(c), radio communication can be established even when the tractor 1 and the mobile terminal 40 are in various positional relations in the field F. As shown in Figs. 11(a) to 11(c), the mobile terminal 40 and/or the tractor 1 located in the region A1 are included in the inner region of the boundary B1. As a result, since the mobile terminal 40 and the tractor 1 can be positioned in the inner region of either the boundary B or B1, it is possible to appropriately transmit the operation data and the setting data in these patterns. The determination of the oscillation radio wave intensity of the agricultural base station 50 and the connection with the mobile terminal 40 are executed as follows.

The control unit 50b of the agricultural base station 50 searches for the position L2 of the stationary base station 60 closest to the detected position L1 of the tractor 1 in the database of the positions of the stationary base stations 60 registered in the storage unit 50d, and determines the separation distance D based on the positions L1 and L2 (S9). Based on the determined separation distance D and the table included in the storage unit 50d, the oscillation radio wave intensity P is determined, and based on the determined separation distance D, the maximum number of mobile terminals 40 that can be connected to the third communication unit 50f is determined (S10). Radio communication between the third communication unit 50f and the mobile terminal 40 is established by transmitting a beacon from the third communication unit 50f of the agricultural base station 50 to the mobile terminal 40 and verifying an encryption key received from the mobile terminal 40. When there is an access attempt from the mobile terminal 40 after the determined maximum number of connections which can be made is exceeded, establishment of the radio communication is restricted (S11).

It is determined whether or not the radio communication with the agricultural base station 50 has been established (S12). When the condition in the S12 is satisfied, it is determined as "Yes", and the operation data and the setting data stored in the storage unit 40b of the mobile terminal 40 are transmitted from the second communication unit 40c to the agricultural base station 50 (S13) . The transmitted operation data and setting data are received by the third communication unit 50f of the agricultural base station 50 and stored in the storage unit 50d (S14). The radio wave having the oscillation radio wave intensity P determined in the S10 is oscillated from the antenna of the third communication unit 50f, whereby the operation data and the setting data stored in the storage unit 50d are transmitted from the third communication unit 50f to the stationary base station 60 (S15). On the other hand, when none of the conditions in the S7 is satisfied, it is determined as "No" in the S7, and the agricultural base station 50 is not activated. Thus, when the condition in the S12 is not satisfied, it is determined as "No" in the S12, and the operation data and the setting data stored in the storage unit 40b of the mobile terminal 40 are transmitted from the second communication unit 40c to the stationary base station 60 (S16) .

### <Modification 1: agricultural base station>

The agricultural base station 50 functions as a mobile base station which is capable of moving. The scale of the mobile base station may be any scale, and for example, the agricultural base station 50 may be a macro cell base station, or may be a small cell (including micro cell, nano cell, pico cell, and the like) base station that complements the macro cell base station. When the agricultural base station 50 is, for example, a small cell base station, the stationary base station 60 according to the present embodiment functions as a macro cell base station. Therefore, the scale covered by the agricultural base station 50 is smaller than that of the stationary base station 60. On the other hand, for example, a cluster of small cells may be formed by the agricultural base station 50, and it is possible to establish appropriate radio communication with a large number of radio communication devices (the mobile terminal 40 and the like) in the field. In this case, it is preferable to suppress radio wave interference. Therefore, as the antenna of the agricultural base station 50, for example, an antenna capable of beamforming is preferably used, and specifically, a Massive MINO antenna of 256 elements or the like may be used. In addition, the small cell of the agricultural base station 50 may be superimposed under the macro cell of the stationary base station 60. In this case, a common frequency may be used between the macro cell and the small cell. In addition, the small cell of the agricultural base station 50 may not be superimposed under the macro cell of the stationary base station 60. In this case, different frequencies may be used between the macro cell and the small cell.

### <Modification 2: agricultural base station>

The control unit 50b of the agricultural base station 50 determines the separation distance D based on the detected position L1 of the tractor 1 and the construction position L2 of the stationary base station 60, and determines the oscillation radio wave intensity P based on the determined separation distance D and the table (see Fig. 8) in which the relation between the separation distance D and the oscillation radio wave intensity P is defined in advance. Instead of this, for example, a table in which the relation between the position L1 of the tractor 1 and the oscillation radio wave intensity P is defined in advance may be stored in the storage unit 50d, and the oscillation radio wave intensity P may be determined based on the detected position L1 of the tractor 1 and the table.

### <Modification 3: agricultural base station>

It is determined that the number of connections with the third communication unit 50e of the mobile terminal 40 increases as the separation distance D which is determined as described above increases. Alternatively, for example, it may be determined that the number of connections decreases as the separation distance D increases. This is based on the fact that as the separation distance D increases, the radio wave of the agricultural base station 50 tends to be less likely to reach the stationary base station 60 and the number of connections with the mobile terminal 40 is limited to transmit data reliably.

### <Modification 4: agricultural base station>

When there is a position which is determined to coincide with the detected position L1 of the tractor 1 in the database of the positions of the fields registered in the storage unit 50d, the control unit 50b of the agricultural base station 50 activates the agricultural base station 50 with the switch 50e. Alternatively, for example, when the tractor 1 is located in the field, the worker may activate the agricultural base station 50.

### <Modification 5: agricultural base station>

In the agricultural base station 50, the operation data (including the data I1 relating to agricultural work) and the setting data (including the data I2 relating to agricultural machine) are temporarily stored in the storage unit 50d, and the operation data and the setting data in the storage unit 50d are transmitted to the stationary base station 60 via the third communication unit 50e. Instead of this, for example, the third communication unit 50e may directly acquire the received operation data and setting data without going through the storage unit 50d and transmit the operation data and setting data to the stationary base station 60.

### <Modification 6: mobile terminal>

The mobile terminal 40 transmits both the operation data (including the data I1 relating to agricultural work) and the setting data (including the data I2 relating to agricultural machine) to the stationary base station 60 via the agricultural base station 50. Alternatively, for example, only one of the operation data and the setting data may be transmitted to the stationary base station 60 via the agricultural base station 50.

### <Modification 7: mobile terminal>

In the mobile terminal 40, the operation data (including the data I1 relating to agricultural work) is temporarily stored in the storage unit 40b, and the operation data in the storage unit 40b is transmitted to the stationary base station 60 via the second communication unit 40c. Alternatively, for example, the second communication unit 40c may directly acquire the received operation data without going through the storage unit 40b and transmit the acquired operation data to the stationary base station 60.

### <Modification 8: mobile terminal>

In the mobile terminal 40, the setting data (including the data I2 relating to agricultural machine) is temporarily stored in the storage unit 40b, and the operation data in the storage unit 40b is transmitted to the stationary base station 60 via the second communication unit 40c. Alternatively, for example, a "transmission button" may be displayed on the setting screen Q1 without storing the setting data in the storage unit 40b, and the second communication unit 40c may transmit the setting data input to the setting screen Q1 to the stationary base station 60 when the transmission button is tapped.

### <Modification 9: tractor>

The connecting unit 8 of the tractor 1 is constituted of a mechanism including a 3-point link mechanism so that the working device 2 can be detached. Alternatively, for example, the connecting unit 8 may be constituted of a mechanism including a draw bar.

### <Modification 10: tractor>

In the communication device 18 of the tractor 1, the operation data (including the data I1 relating to agricultural work) is temporarily stored in the storage unit 18b, and the operation data in the storage unit 18b is transmitted to the mobile terminal 40 via the first communication unit 18c. Alternatively, for example, the first communication unit 18c may directly acquire the operation data input to the input and output unit 18a without going through the storage unit 18b, and transmit the operation data to the mobile terminal 40.

### <Summary>

The tractor 1 is an agricultural machine that performs agricultural work in a field. The data I1 relating to agricultural work and the data I2 relating to agricultural machine are transmitted from the mobile terminal 40 to the stationary base station 60 included in the external communication network N2. The tractor 1 includes the agricultural base station 50 that can be connected to at least one of the mobile terminal 40 and the stationary base station 60. Accordingly, even when it is difficult to directly communicate between the stationary base station 60 and the mobile terminal 40, for example, the data I1 relating to agricultural work and the data I2 relating to agricultural machine can be reliably transmitted to the stationary base station 60 via the agricultural base station 50.

The tractor 1 further includes the traveling vehicle 3 including a connecting device to which the working device can be connected, and the agricultural base station 50 is provided in the traveling vehicle 3. Accordingly, the agricultural base station 50 moves integrally with the traveling vehicle 3. Therefore, the agricultural base station 50 can be caused to function as a mobile base station which can move.

The agricultural base station 50 operates when the position L1 of the tractor 1 is in a field. Accordingly, even when the tractor 1 is located in a field as a case where it is difficult to directly communicate between the stationary base station 60 and the mobile terminal 40, the data I1 relating to agricultural work and the data I2 relating to agricultural machine can be reliably transmitted to the stationary base station 60.

The agricultural base station 50 connects to the mobile terminal 40 and the stationary base station 60 via radio waves, and changes the oscillation radio wave intensity P in accordance with the position L1 of the tractor 1. Accordingly, regardless of the position L1 of the tractor 1, it is possible to establish connection with the mobile terminal 40 and the stationary base station 60 with the oscillation radio wave intensity P at which communication is possible.

The agricultural base station 50 can be connected to a plurality of mobile terminals 40, and change at least the number of connections to the mobile terminals 40 in accordance with the position L1 of the tractor 1. Accordingly, regardless of the position L1 of the tractor 1, the number of connections to the mobile terminals 40 can be adjusted to an appropriate number, and the data transmission to the stationary base station 60 can be made more reliable.

The agricultural base station 50 operates when the radio wave intensity of the stationary base station 60 at the position L1 of the tractor 1 is less than or equal to a threshold value. Accordingly, even when the radio wave intensity of the stationary base station 60 is less than or equal to the threshold value as a case where it is difficult to directly communicate between the stationary base station 60 and the mobile terminal 40, the data I1 relating to agricultural work and the data I2 relating to agricultural machine can be reliably transmitted to the stationary base station 60.

The communication system 100 is a communication system of the tractor 1 which performs agricultural work in a field, and includes the stationary base station 60 that is included in the external communication network N2, the mobile terminal 40 that transmits the data I1 relating to agricultural work and the data I2 relating to agricultural machine to the stationary base station 60, and the agricultural base station 50 that can be connected to the mobile terminal 40 and the stationary base station 60. Accordingly, even when it is difficult to directly communicate between the stationary base station 60 and the mobile terminal 40, for example, the data I1 relating to agricultural work and the data I2 relating to agricultural machine can be reliably transmitted to the stationary base station 60 via the agricultural base station 50.

It should be understood that the embodiments disclosed herein are illustrative in all respects and are not restrictive. The scope of the present invention is defined not by the above description but by the claims, and is intended to include all modifications within the meaning and scope equivalent to the claims.

### REFERENCE SIGNS LIST

- 1: Tractor
- 2: Working device
- 3: Traveling vehicle body
- 4: Prime mover
- 8: Connecting unit
- 17: Control device
- 18: Communication device
- 18b: Storage unit
- 18c: First communication unit
- 30: Position detection device
- 40: Mobile terminal
- 40a: Control unit
- 40b: Storage unit
- 40c: Second communication unit
- 50: Agricultural base station
- 50b: Control unit
- 50c: Radio wave detection unit
- 50d: Storage unit
- 50e: Switch
- 50f: Third communication unit
- 60: Stationary base station
- A1: Region
- B: Boundary
- B1: Boundary
- D: Separation distance
- F: Field
- I1: Data relating to agricultural work
- I2: Data relating to agricultural machine

- L1: Position of tractor
- L2: Position of stationary base station
- N1: In-vehicle communication network
- N2: External communication network
- P: Oscillation radio wave intensity

## Claims

1. An agricultural machine that performs an agricultural work in a field, wherein
data relating to the agricultural work or the agricultural machine is transmitted from a mobile terminal to a stationary base station included in an external network, and
the agricultural machine includes an agricultural base station that can be connected to at least one of the mobile terminal and the stationary base station.

2. The agricultural machine according to claim 1, further comprising: a traveling vehicle body that includes a connecting device to which a working device can be connected, wherein
the agricultural base station is provided on the traveling vehicle body.

3. The agricultural machine according to claim 1 or 2, wherein
the agricultural base station operates when a position of the agricultural machine is in the field.

4. The agricultural machine according to any one of claims 1 to 3, wherein
the agricultural base station connects to the mobile terminal or connects to the stationary base station via a radio wave, and changes an intensity of the radio wave in accordance with the position of the agricultural machine.

5. The agricultural machine according to any one of claims 1 to 4, wherein
the agricultural base station can be connected to a plurality of the mobile terminals, and changes at least a number of connections to the mobile terminals in accordance with the position of the agricultural machine.

6. The agricultural machine according to any one of claims 1 to 3, wherein
the agricultural base station operates when a radio wave intensity of the stationary base station at a position of the agricultural machine is less than or equal to a threshold value.

7. An agricultural machine communication system for an agricultural machine that performs an agricultural work in a field, the agricultural machine communication system comprising:
a stationary base station that is included in an external network;
a mobile terminal that transmits data relating to the agricultural work or the agricultural machine to the stationary base station; and
an agricultural base station that can be connected to at least one of the mobile terminal and the stationary base station.

8. The agricultural machine communication system according to claim 7, wherein
the agricultural machine further includes a traveling vehicle body that includes a connecting device to which a working device can be connected, and
the agricultural base station is provided on the traveling vehicle body.

9. The agricultural machine communication system according to claim 7 or 8, wherein
the agricultural base station operates when a position of the agricultural machine is in the field.

10. The agricultural machine communication system according to any one of claims 7 to 9, wherein
the agricultural base station connects to the mobile terminal or connects to the stationary base station via a radio wave, and changes an intensity of the radio wave in accordance with the position of the agricultural machine.

11. The agricultural machine communication system according to any one of claims 7 to 10, wherein
the agricultural base station can be connected to a plurality of the mobile terminals, and changes at least a number of connections to the mobile terminals in accordance with the position of the agricultural machine.

12. The agricultural machine communication system according to any one of claims 7 to 11, wherein
the agricultural base station operates when a radio wave intensity of the stationary base station at a position of the agricultural machine is less than or equal to a threshold value.
